# EUROPÄISCHE PATENTANMELDUNG

(11) **EP 0 649 889 A1**
(43) Veröffentlichungstag der Anmeldung: **26.04.1995**
(21) Anmeldenummer: 94115964.2
(22) Anmeldetag: 10.10.1994
(51) Int. Cl.: C09D 11/10, C08G 8/34

(54) **Selbstgelierende Bindemittelharze mit verbesserter Lagerstabilität**

(30) Priorität: 18.10.1993 DE 4335426
(71) Anmelder: HOECHST AKTIENGESELLSCHAFT, D-65926 Frankfurt am Main (DE)
(72) Erfinder: Bender, Albert, Dr., D-55130 Mainz (DE)

(57) **Zusammenfassung**

Öllösliche Phenolharz-modifizierte Naturharzsäureester, die nach wenigstens 3 Monaten Lagerung im Festzustand an der Luft noch in Mineralöl 40 Gew.-%ige trübungsfreie selbstgelierende Lösungen bilden und als Bindemittelharze für Offsetdruckfarben geeignet sind. Die Herstellung erfolgt durch Reaktion von
A) Naturharzen oder Naturharzsäuren,
B) einkernigen und mehrkernigen Phenolen, die gegenüber Oxoverbindungen einfach- oder mehrfach-funktionell sind,
C) Aldehyden oder Aldehydacetalen,
D) aliphatischen, cycloaliphatischen oder aromatisch-aliphatischen Polyolen,
E) α,β-ethylenisch ungesättigten Carbonsäuren oder deren Anhydriden,
F) (C₁-C₈₀)-Carbonsäuren oder Carbonsäureestern mit einer Jodzahl kleiner als 50 g Jod/100 g Carbonsäure oder Carbonsäureester
   sowie gegebenenfalls
G) ethylenisch ungesättigten Kohlenwasserstoffharzen
   in Gegenwart von
H) Magnesiumverbindungen
bei einer Temperatur im Bereich von 100 bis 300 °C unter kontinuierlicher azeotroper Destillation des Reaktionswassers.

## Beschreibung

Die Erfindung betrifft öllösliche, mit Carbonsäuren oder Carbonsäureestern und Phenolharzen modifizierte Naturharzsäureester, die selbstgelierende Mineralöl- und Leinöllösungen bilden und eine verbesserte Lagerstabilität aufweisen, sowie Verfahren zu deren Herstellung aus Naturharzen, Phenolen, Aldehyden, Carbonsäuren oder Carbonsäureestern, Magnesium-Verbindungen, Veresterungs- und Modifizierungsmittel und deren Verwendung als Bindemittelharze für Offsetdruckfarben.

Es ist bereits bekannt, selbstgelierende Bindemittelharze für Offsetdruckfarben aus Mischungen von Naturharzen und deren Umsetzungsprodukten mit α,β-olefinisch ungesättigten Carbonsäuren oder deren Anhydriden, einkernigen oder mehrkernigen Phenolen, Aldehyden oder Aldehydacetalen, polyfunktionellen Alkoholen, gegebenenfalls Fettsäureverbindungen und gegebenenfalls ethylenisch ungesättigten Kohlenwasserstoffharzen herzustellen. Zwingend notwendig für das Gelingen der Reaktion sind dabei die Verwendung von Magnesiumverbindungen zur Katalyse der Polykondensation sowie die azeotrope Entfernung des dabei gebildeten Reaktionswassers (EP-A 0 548 506).

Besonders vorteilhaft ist die Mitverwendung vegetabiler Öle, da dann die Produkte niedrige Schmelzviskositäten besitzen, so daß deren Handhabung erleichtert wird. Dabei kommen halbtrocknende und trocknende Öle mit einer Jodzahl von 50 bis 150 g Jod pro 100 g Öl zum Einsatz. Beschrieben sind beispielsweise Produkte mit dem ungesättigten Sojaöl als Fettsäureverbindung. Die damit hergestellten Harze haben jedoch den schwerwiegenden Nachteil, daß sie bei Lagerung an der Luft nicht stabil bleiben. Bereits nach spätestens acht Wochen sind sie durch Alterung so stark verändert, daß sie sich weder in Mineralöl noch in Leinöl vollständig lösen und die Lösungen nur noch eine abgeschwächte oder überhaupt keine Gelstruktur mehr zeigen. Dies erschwert ihren Einsatz in der Praxis oder macht ihn gar unmöglich.

Der vorliegenden Erfindung lag somit die Aufgabe zugrunde, selbstgelierende Kunstharze verfügbar zu machen, die auch nach längerer Lagerung an der Luft stabil bleiben, und die sich dann in Mineralöl und vegetabilem Öl unter Beibehaltung der Gelstruktur lösen.

Es wurde nun überraschenderweise gefunden, daß man Kunstharze, die diese Eigenschaften besitzen, dadurch erhalten kann, daß man bei der bekannten Herstellung selbstgelierender Bindemittelharze für Offsetdruckfarben (C₁-C₈₀)-Carbonsäuren oder deren Ester, die eine Jodzahl unterhalb von 50 g Jod pro 100 g Carbonsäure oder Carbonsäureester aufweisen, mit einkondensiert.

Gegenstand der Erfindung sind daher öllösliche, Phenolharz-modifizierte Naturharzsäureester, die nach wenigstens 3 Monaten Lagerung im Festzustand an der Luft noch in Mineralöl (Siedebereich 240 bis 270 °C, Anilinpunkt 72 °C), 40 Gew.-%ige trübungsfreie, selbstgelierende Lösungen bilden, herstellbar durch Reaktion von mindestens jeweils einer Verbindung aus den Substanzgruppen
A) Naturharze und Naturharzsäuren,
B) einkernige und mehrkernige Phenole, die gegenüber Oxoverbindungen einfach oder mehrfach-funktionell sind,
C) Aldehyde und Aldehydacetale,
D) aliphatische, cycloaliphatische und aromatisch-aliphatische Alkohole mit mindestens zwei Hydroxylgruppen,
E) α,β-ethylenisch ungesättigte Carbonsäuren und deren Anhydride und
F) (C₁-C₈₀)-Carbonsäuren und Carbonsäureester mit einer Jodzahl kleiner als 50 g Jod pro 100 g Carbonsäure oder Carbonsäureester sowie gegebenenfalls weitere Verbindungen aus der Substanzgruppe
G) ethylenisch ungesättigte Kohlenwasserstoffharze
   in Gegenwart von
H) Magnesiumverbindungen
bei einer Temperatur im Bereich von 100 bis 300 °C unter kontinuierlicher azeotroper Destillation des Reaktionswassers mit einem Schleppmittel.

Als Verbindungen der Substanzgruppen A) bis H) finden vorzugsweise Verwendung:
A) Naturharze oder Naturharzsäuren, vorzugsweise Kolophonium, Wurzelharz, Tallharz sowie disproportioniertes oder partiell hydriertes oder dimerisiertes Naturharz beliebiger Provenienz,
B) einkernige oder mehrkernige Phenole, vorzugsweise solche, die gegenüber Oxoverbindungen mehrfachfunktionell sind, besonders bevorzugt mono- und insbesondere bifunktionelle Phenole, bei denen eine oder zwei der ortho- oder para-Stellungen zur phenolischen Hydroxylgruppe am Benzolring reaktiv und zur Aldehydaddition befähigt sind, beispielsweise Phenol, (C₁-C₁₂)-Alkylphenole, Aryl- oder Aralkylphenole, Kresole, 1,3,5-Xylenole, Isopropyl-, p-tert.Butyl-, Amyl-, Oktyl-, Nonylphenol, Diphenylolpropan, Phenylphenol, Cumylphenol sowie Additionsprodukte aus Phenolen und ethylenisch ungesättigten Monomeren, vorzugsweise Styrol, α-Methylstyrol, α-Chlorstyrol, Vinyltoluol, Cyclopentadien,
C) Aldehyde oder Aldehydacetale, vorzugsweise aliphatische (C₁-C₇)-Aldehyde, insbesondere Formaldehyd in seinen verschiedenen monomeren, oligomeren und polymeren Formen, Acetaldehyd, Butyraldehyd, Isobutyraldehyd, ferner Benzaldehyd, Furfurol, Glyoxal,
D) mindestens zwei Hydroxylgruppen enthaltende Veresterungsmittel zur Veresterung der Umsetzungsprodukte aus Phenolharzen und Naturharzen bzw. Naturharzsäuren, vorzugsweise polyfunktionelle aliphatische Alkohole, insbesondere bifunktionelle, beispielsweise Glykole oder trifunktionelle, beispielsweise Trimethyloläthan, Trimethylolpropan, Glycerin, oder tetrafunktionelle, beispielsweise Pentaerythrit, oder pentafunktionelle, beispielsweise dimerisiertes Trimethylolpropan, oder hexafunktionelle Alkohole, beispielsweise dimerisierter Pentaerythrit, besonders bevorzugt Glycerin, Trimethylolpropan und Pentaerythrit,
E) α,β-ungesättigte Carbonsäuren oder Carbonsäureanhydride, vorzugsweise aliphatische Carbonsäuren mit 3 bis 22 Kohlenstoffatomen, insbesondere Fumarsäure, Maleinsäure, Maleinsäureanhydrid, Itaconsäure, Zimtsäure, Acrylsäure, besonders bevorzugt Maleinsäureanhydrid,
F) (C₁-C₈₀)-Carbonsäuren oder Carbonsäureester mit einer Jodzahl kleiner als 50 g Jod pro 100 g Carbonsäure oder Carbonsäureester, vorzugsweise (C₃-C₃₀)-Carbonsäuren, beispielsweise Buttersäure, Isononansäure, Dodecansäure, Versaticsäure, Hydroxystearinsäure, insbesondere monomere, dimere und trimere Fettsäuren, die auch vollständig oder teilweise hydriert sein können, oder Carbonsäureester wie beispielsweise die Ethyl- oder Glycerinester der vorstehend genannten Säuren, Kokosöl, Kokosfett oder hydriertes Kokosfett, Palmkernöl, Dikafett, Chinesischer Tag, Japanwachs oder epoxidiertes Sojaöl, besonders bevorzugt Carbonsäureester mit einer Jodzahl unterhalb von 30 g, insbesondere unterhalb von 15 g Jod pro 100 g Carbonsäureester, beispielsweise die Ester gesättigter Fettsäuren mit mehrwertigen Alkoholen, insbesondere mit Glycerin, ganz besonders bevorzugt hydriertes Kokosfett,
G) ethylenisch ungesättigte Kohlenwasserstoffharze zur Harzmodifizierung, vorzugsweise Polymere oder Oligomere aus einfach und/oder mehrfach ethylenisch ungesättigten (C₅-C₉)-Kohlenwasserstoffen, insbesondere aus der Gruppe Isopren, Cyclopentadien, Inden, Cumaron, Styrol,
   oder Copolymerisate von ethylenisch ungesättigten Kohlenwasserstoffharzen mit Verbindungen der Substanzgruppe A),
H) Magnesiumverbindungen, vorzugsweise Oxide und Hydroxide oder Salze von organischen Säuren, insbesondere Carbonate, Bicarbonate, Acetate, Formiate, Oxalate.

Gegenstand der Erfindung ist auch die Herstellung von öllöslichen Phenolharzmodifizierten Naturharzsäureestern durch Umsetzung der Komponenten A) bis H). Dabei beträgt der Anteil der einzelnen Komponenten, bezogen auf die Gesamtmenge der eingesetzten Komponenten A) bis H),
20 bis 80 Gew.-%, vorzugsweise 30 bis 75 Gew.-%, insbesondere 35 bis 60 Gew.-%, Naturharze oder Naturharzsäuren aus der Substanzgruppe A),
1 bis 45 Gew.-%, vorzugsweise 15 bis 40 Gew.-%, insbesondere 20 bis 35 Gew.-%, phenolische Komponenten aus der Substanzgruppe B) und
1 bis 20 Gew.-%, vorzugsweise 3 bis 10 Gew.-%, insbesondere 5 bis 8 Gew.-%, Aldehyde oder Aldehydacetale aus der Substanzgruppe C),
bei einem Molverhältnis der Phenolkomponente B) zur Aldehydkomponente C), das vorzugsweise im Bereich von 1 : 0,9 bis 1 : 4,5, insbesondere 1 : 1 bis 1 : 2,5 liegt,
oder gegebenenfalls anstelle der Aldehyd- oder Phenolkomponenten aus den Substanzgruppen B) und C) oder anteilig mit diesen bis zu vorzugsweise 65 Gew.-% von aus Verbindungen der Substanzgruppen B) und C) separat hergestellte Kondensationsprodukte in Phenolresol- oder Novolakform,
1 bis 20 Gew.-%, vorzugsweise 3 bis 15 Gew.-%, insbesondere 4 bis 10 Gew.-%, Polyolkomponenten aus der Substanzgruppe D),
0,1 bis 10 Gew-%, bezogen auf das eingesetzte Naturharz bzw. die Naturharzsäure, α,β-ethylenisch ungesättigte Carbonsäuren oder deren Anhydride aus der Substanzgruppe E),
0,1 bis 30 Gew.%, vorzugsweise 3 bis 15 Gew.-%, insbesondere 5 bis 10 Gew.-%, (C₁-C₈₀)-Carbonsäuren oder Carbonsäureester aus der Substanzgruppe F),
0 bis 30 Gew.-%, vorzugsweise 1 bis 25 Gew.-%, insbesondere 2 bis 10 Gew.-%, Kohlenwasserstoffharzkomponenten aus der Substanzgruppe G),
0,01 bis 5 Gew.-%, vorzugsweise 0,3 bis 3 Gew.-%, insbesondere 0,4 bis 0,8 Gew.-%, berechnet als MgO, Magnesiumverbindungen aus der Substanzgruppe H).

Zur azeotropen Destillation des gebildeten Reaktionswassers werden 0,01 bis 20 Gew.-%, vorzugsweise 0,1 bis 5 Gew.-%, bezogen auf die Gesamtmenge der Komponenten A) bis H), eines inerten Schleppmittels zugesetzt.

Als inerte Schleppmittel werden vorzugsweise gesättigte aliphatische oder aromatische Kohlenwasserstoffe eingesetzt, deren Siedetemperaturen unter Normaldruck oberhalb von 100°C liegen, beispielsweise Alkane, insbesondere Hexan, Dekan, Gemische von aliphatischen Kohlenwasserstoffen, beispielsweise Benzin oder entsprechende Mineralölfraktionen, ferner vorzugsweise Toluol oder Xylol.

Die Komponenten werden in Lösung oder vorzugsweise in Substanz bei Temperaturen im Bereich von 100 bis 300°C, vorzugsweise 110 bis 280°C, insbesondere 140 bis 260°C, umgesetzt. Dazu wird entweder die gesamte Mischung aus allen eingesetzten Komponenten zur Reaktion gebracht oder einzelne Komponenten werden vorgelegt und die übrigen durch Zudosieren zur Reaktion gebracht.

Zweckmäßigerweise wird die Reaktion so durchgeführt, daß Naturharze oder Naturharzsäuren aus der Substanzgruppe A) mit α,β-ethylenisch ungesättigten Carbonsäuren oder deren Anhydriden aus der Substanzgruppe E) im Temperaturbereich von vorzugsweise 130 bis 190 °C zur Reaktion gebracht werden und dann mit phenolischen Komponenten aus der Substanzgruppe B), Aldehydkomponenten aus der Substanzgruppe C), oder anstelle von Phenol und Aldehyd oder auch anteilig mit diesen ein separat nach bekannten Methoden aus Phenolen und Aldehyden in Gegenwart basischer Katalysatoren bei einer Temperatur von 50 bis 160°C, vorzugsweise 60 bis 100°C, bei Normaldruck oder erhöhtem Druck hergestelltes Kondensationsprodukt, sowie Polyolkomponenten aus der Substanzgruppe D), (C₁-C₈₀)-Carbonsäuren oder Carbonsäureester aus der Substanzgruppe F), sowie gegebenenfalls Kohlenwasserstoffharzkomponenten aus der Substanzgruppe G), und einer Magnesiumverbindung der Substanzgruppe H) vermischt und zunächst bei einer Temperatur von 100 bis 260°C, vorzugsweise 110 bis 160°C, umgesetzt werden, vorzugsweise unter einem Druck zwischen 1 und 10 bar, insbesondere 1 und 5 bar. Wird ein separat hergestelltes Phenol-Formaldehyd-Kondensationsprodukt verwendet, so kann unter Normaldruck gearbeitet werden.

Wird das Kondensationsprodukt der Phenolkomponente B) und Aldehydkomponente C) in situ hergestellt, ist eine vom vorstehenden Verfahren abweichende Reaktionsführung besonders bevorzugt, da sich hiermit höhere Aldehyd-Umsätze erzielen lassen. Hierbei werden zunächst Naturharze oder Naturharzsäuren aus der Substanzgruppe A), phenolische Komponenten aus der Substanzgruppe B), Aldehydkomponenten aus der Substanzgruppe C), Magnesiumverbindungen aus der Substanzgruppe H) und gegebenenfalls Kohlenwasserstoffharzkomponenten aus der Substanzgruppe G) bei einer Temperatur von 100 bis 260 °C, vorzugsweise 110 bis 160 °C, und einem Druck von 1 bis 10 bar, vorzugsweise 1,5 bis 5 bar, miteinander umgesetzt. Das erhaltene Gemisch wird sodann mit α,β-ethylenisch ungesättigten Carbonsäuren oder deren Anhydriden aus der Substanzgruppe E) im Temperaturbereich zwischen 100 und 250 °C, vorzugsweise 160 bis 200 °C, zur Reaktion gebracht. Anschließend wird die Polyolkomponente der Substanzgruppe D) hinzugefügt. Die Carbonsäurekomponenten der Substanzgruppe F) können dabei an jeder Stelle der Reaktionssequenz mitverwendet werden, also beispielsweise gleich zu Beginn der Reaktion, aber auch erst nach der Zugabe des Alkohols.

Anschließend wird das Reaktionsgemisch auf eine Temperatur zwischen 190 und 300°C, vorzugsweise 230 bis 260°C erhitzt, und der Reaktionsmischung ein als Schleppmittel zur azeotropen Destillation von Wasser bei der Umsetzungstemperatur befähigtes inertes organisches Lösungsmittel zugesetzt. Dabei wird das entstehende Reaktionswasser kontinuierlich azeotrop destilliert und aus dem Reaktionsgemisch entfernt. Vorzugsweise wird das Schleppmittel im Kreislauf über einen Wasserabscheider geführt. Die azeotrope Destillation wird solange fortgesetzt, bis die Bildung von Reaktionswasser beendet ist, und das entstandene Harz eine Säurezahl unterhalb von 50 mg KOH/g Harz, vorzugsweise unterhalb von 30 mg KOH/g Harz, aufweist. Dann wird das Schleppmittel durch Destillation zunächst bei Normaldruck und am Ende unter Vakuum bei einem Druck zwischen 1000 und 0,1 mbar, vorzugsweise 200 und 50 mbar, und einer Temperatur bis zu 300°C, vorzugsweise bis zu 280°C, entfernt, das Reaktionsgemisch auf Raumtemperatur abgekühlt und der Phenolharz-modifizierte Naturharzsäureester vorzugsweise als festes Harz gewonnen.

Bei dem erfindungsgemäßen Syntheseverfahren wird der Fortgang der Kondensationsreaktion zweckmäßigerweise anhand der Säurezahl des Reaktionsgemisches verfolgt. So kann die Säurezahl des Harzgemisches anfangs vorzugsweise bis zu 200 mg KOH pro g Harz betragen, ermittelt nach den üblichen Methoden. Sie fällt mit fortschreitender Umsetzung unter Wasserabspaltung und azeotroper Wasserauskreisung fortlaufend ab und die Veresterungsreaktion wird solange fortgesetzt, bis die erfindungsgemäße Umsetzung das gewünschte Endstadium erreicht hat und die Säurezahl auf Werte unterhalb von 50 mg, vorzugsweise unterhalb von 30 mg KOH pro g Harz abgesunken ist. Danach wird das Schleppmittel durch Destillation, zuletzt unter Vakuum, aus dem Reaktionsprodukt entfernt. In manchen Fällen kann es auch vorteilhaft sein, das Schleppmittel oder Anteile davon in dem Endprodukt zu belassen, falls es sich problemlos in dem Endprodukt löst und dessen weitere Verwendung nicht stört oder beeinträchtigt. Dies kann vorzugsweise bei sehr hochmolekularen Harzen mit hohem Schmelzpunkt der Fall sein, deren Verarbeitbarkeit durch eine solche Maßnahme erheblich verbessert werden kann, da ihre Schmelzviskosität und der Schmelzpunkt erniedrigt und somit eine raschere Löslichkeit in Mineralöl ermöglicht wird. Andererseits ist es auch möglich, die Harzschmelze nachträglich mit Mineralöl zu versetzen. Hierbei sind alle Möglichkeiten vom festen über einen flüssigen Harz-Mineralöl-Firnis bis zur Lösung gegeben. Es ist auch möglich, während oder vorzugsweise nach der eigentlichen Reaktion weitere Verbindungen zuzugeben, vorzugsweise um die Verträglichkeit zu optimieren. Geeignete Verbindungen sind beispielsweise Monomere oder Oligomere, wie Kolophonium, Kolophoniumester, Styrol oder Polymere, wie Phenolharze, Alkydharze, Polyester, Polystyrol, oder Mischungen davon.

Da sich Naturharze verschiedener Provenienz hinsichtlich ihrer Zusammensetzung unterscheiden können, können auch unterschiedliche Produkteigenschaften, beispielsweise hinsichtlich der Viskosität resultieren. Die Rezeptur kann dann jedoch durch geringfügige Änderung der Konzentration der einzelnen Komponenten dem jeweiligen Naturharz angepaßt werden.

Das Molekulargewicht der erfindungsgemäßen Harze kann durch Gelpermeationschromatographie der Harzlösungen in Tetrahydrofuran (THF) an Polystyrolschaum in einem Permeationsmeßgerät nach bekannten Methoden ermittelt werden. Das mittlere Molekulargewicht (Gewichtsmittel M_{w}) der erfindungsgemäßen Harze liegt gemäß den erhaltenen Meßergebnisssen vorzugsweise bei Werten oberhalb von M_{w} > 5000 und ist nach oben nicht kritisch begrenzt. Besonders bevorzugt liegt das mittlere Molekulargewicht M_{w} jedoch in einem Bereich zwischen 5000 und 100000, insbesondere 8000 und 50000.

Die erfindungsgemäßen Harze weisen in Mineralöl eine vorzugsweise gute Verträglichkeit auf. Zur Ermittlung der Mineralölverträglichkeit beziehungsweise der Klarlöslichkeit in Mineralöl der erfindungsgemäßen Harze werden diese jeweils bei 180 °C in standardisiertem Mineralöl (Siedebereich 240 bis 270 °C, Anilinpunkt 72°C) zu 40 Gew.-%igen klaren Harzlösungen gelöst, die Lösungen auf 23°C abgekühlt und sogleich unter Rühren bis zum Auftreten einer Trübung (Trübungspunkt) mit dem gleichen Mineralöl titriert. Das am Trübungspunkt in der Lösung vorliegende Verhältnis von 1 Gewichtsteile Harz zu X Gewichtsteilen Mineralöl wird als Verträglichkeit bzw. Klarlöslichkeitsendpunkt bezeichnet. Die Harze zeigen vorzugsweise im Bereich von 1 Gewichtsteil Harz zu 3 bis 5 Gewichtsteilen Mineralöl keine Trübungen oder Entmischungen. Bei Verwendung anderer Mineralöle anstelle des hier verwendeten standardisierten Prüföls (®Mineralöl PKW F 4/7 der Fa. Haltermann, Siedebereich 240 bis 270 °C, Anilinpunkt 72 °C) können sich die bei der Mineralölverträglichkeit gefundenen Zahlenwerte ändern.

Zur Messung der Viskoelastizität, die ein Maß für die Gelstruktur ist, werden die erfindungsgemäßen und in Mineralöl selbstgelierenden Phenolharz-modifizierten Naturharzsäureester zunächst in Gele überführt, indem man sie innerhalb von 30 Minuten bei 180 °C im Gewichtsverhältnis Harz zu Mineralöl von 1 : 1,5 mit dem vorstehend beschriebenen Mineralöl als Prüföl vermischt, die Mischungen auf Raumtemperatur abgekühlt, wobei aus der 40 Gew.-%igen Harzlösung in Mineralöl ein Gel entsteht, und den Verlustfaktor (tanδ) des Gels in einem oszillierenden Rotationsviskosimeter (Gerät RV 20/CV 100 der Fa. Haake mit der Meßeinrichtung PK 20) bei 23 °C, einem Auslenkwinkel von 10 ° und einem Frequenzsweep von 0,05 bis 5 Hz ermittelt. Die im Bereich der Winkelgeschwindigkeit von 1 bis 10 s⁻¹ gemessenen Werte liegen unterhalb von 3, vorzugsweise unterhalb von 2, insbesondere unterhalb von 1,5. Bei Verwendung anderer Mineralöle anstelle des hier verwendeten Prüföls sowie abweichender Meßbedingungen können die gemessenen tanδ-Werte leicht variieren.

Zur Bestimmung der Lagerstabilität wird Harz auf Erbsengröße mechanisch zerkleinert und auf einem Teller an Luft gelagert. In Abhängigkeit von der Lagerdauer werden dann die Auflösbarkeit in Mineralöl und die resultierende Gelstärke nach dem oben angegebenen Verfahren bestimmt. Die erfindungsgemäßen öllöslichen Phenolharz-modifizierten Naturharzsäureester bilden nach wenigstens 3, vorzugsweise wenigstens 6 und insbesonders wenigstens 8 Monaten Lagerung im Festzustand an der Luft noch 40 Gew.-%ige, trübungsfreie selbstgelierende Lösungen mit den oben genannten Verlustfaktoren.

Weiterer Gegenstand der Erfindung ist die Verwendung der erfindungsgemäßen Harze als Bindemittelharze, vorzugsweise in Druckfarben für den Offsetdruck und den Buchdruck, in denen sie insbesondere in Gelform als Gelfirnisse sehr vorteilhaft einsetzbar sind.

Die Erfindung wird durch die nachfolgenden Beispiele näher erläutert. Die in den Beispielen angegebenen Teile und Prozente beziehen sich auf das Gewicht, soweit nicht anders vermerkt.

### Vergleichsbeispiel 1

Nach bekannten Verfahren wird gemäß Beispiel 2 der DE-A 41 36 316 ein Bindemittelharz hergestellt.

In einem heizbaren 2l-Mehrhalskolben mit Rührwerk, Thermometer, Tropftrichter, Rückflußkühler und Einfüllrohr werden unter einer Stickstoffatmosphäre 527 g handelsübliches Kolophonium, das auch als Naturharz oder Naturharzsäure bezeichnet wird, geschmolzen und der 160 °C heißen Harzschmelze 28,3 g Maleinsäureanhydrid zudosiert. Es setzt eine exotherme Reaktion ein, nach deren Abklingen das Reaktionsgemisch noch 1 Stunde bei 160 °C gehalten wird. Anschließend werden der Mischung bei 160 °C 308 g Nonylphenol, 111 g Sojaöl (Jodzahl 130 g Jod/100 g Öl), 74,2 g Pentaerythrit und 6,4 g Magnesiumoxid, suspendiert in 30 ml Xylol, getropft, die Temperatur auf 110 °C erniedrigt, 78 g Paraformaldehyd zugegeben und die Mischung 1 Stunde bei 110 °C gerührt. Danach wird die Temperatur innerhalb von 20 Minuten auf 130 °C erhöht, wobei das Einsetzen der Phenolresolbildung unter Wasserabspaltung beginnt. Die Reaktionstemperatur wird weitere 2 Stunden bei 130 °C gehalten, danach der Rückflußkühler mit einem Azeotropwasserabscheider kombiniert, dieser mit Xylol befüllt, das bei der Kondensationsreaktion entstehende Wasser durch azeotrope Destillation aus dem Reaktionsgemisch ausgekreist und entfernt. Dabei wird die Reaktionstemperatur innerhalb von 4 Stunden kontinuierlich bis auf 250 °C erhöht und ständig solange Wasser azeotrop ausgekreist, bis die Wasserbildung aufhört und das Reaktionsgemisch eine Säurezahl von 23 mg KOH/g Reaktionsgemisch erreicht hat. Danach wird bei der gleichen Temperatur das Schleppmittel destillativ aus dem Reaktionsgemisch entfernt, zuletzt über 30 Minuten unter Vakuum bei 60 mbar. Nach Beendigung der Vakuumdestillation wird das Reaktionsgemisch auf Raumtemperatur abgekühlt. Es werden 962 g festes Bindemittelharz als glasartig erstarrte Schmelze, die pulverisierbar ist und einen Schmelzpunkt von 126 °C besitzt, erhalten. Eine Lösung von 1 Teil Harz in 5 Teilen des vorstehenden Mineralöls ergibt eine stabile, klare Lösung, die Verträglichkeit ist also besser als 1:5. Das durch Gelpermeationschromatographie ermittelte mittlere Molekulargewicht ergibt sich zu 48700. Die Reaktionszeit zur Herstellung beträgt 16 Stunden.

Zur Herstellung des Gels wird das Harz in 40 Gew.-%iger Konzentration in Mineralöl des Siedebereichs 240 bis 270 °C und dem Anilinpunkts 72 °C innerhalb von 30 Minuten gelöst. Nach Abkühlen auf Raumtemperatur bildet sich ein festes, stabiles Gel, dessen tanδ-Wert 1,4 beträgt.

Mit dem an Luft gelagertem Harz wird der Versuch der Gelbildung in Mineralöl nach 2 Monaten wiederholt. Das Harz löst sich mit den angegebenen Lösebedingungen nicht vollständig auf. Es wird ein heterogenes Gemisch erhalten, das nach Abkühlen auf Raumtemperatur kein Gel bildet. Das Gemisch ist aufgrund seiner heterogenen Zusammensetzung für eine erfindungsgemäße Anwendung unbrauchbar.

### Beispiel 1

Man verfährt analog wie in Vergleichsbeispiel 1 angegeben, ersetzt aber das Sojaöl (Jodzahl 130 g Jod/100 g Öl) durch 60 g hydriertes Kokosfett (Jodzahl 5 g Jod/100 g Fett). Es werden 918 g Festharz vom Schmelzpunkt 120 °C erhalten. Eine Lösung von 1 Teil Harz in 5 Teilen des vorstehenden Mineralöls ergibt eine stabile, klare Lösung, die Verträglichkeit ist also besser als 1:5. Das durch Gelpermeationschromatographie ermittelte mittlere Molekulargewicht ergibt sich zu 35700. Die Reaktionszeit zur Herstellung beträgt 16 Stunden.

Nach Auflösen in Mineralöl zu den in Vergleichsbeispiel 1 angegebenen Bedingungen wird ein Gel mit einem tanδ-Wert von 1,5 erhalten.

Auch nach einer Lagerung von 6 Monaten an Luft löst sich das Harz unter den beschriebenen Bedingungen rückstandsfrei unter Bildung eines stabilen Gels mit einem tanδ-Wert von 1,5 auf. Das Harz kann in hervorragender Weise zur Herstellung von Offsetdruckfarben eingesetzt werden.

### Beispiel 2

Man verfährt analog wie in Beispiel 1, verwendet aber statt Kokosfett 50 g Isononansäure (Jodzahl 1 g Jod/100 g Säure) und zusätzlich 10 g Glycerin. Nach einer Reaktionsdauer von 16 Stunden wird ein Harz vom Schmelzpunkt 135 °C erhalten, das in dem oben angegebenen Mineralöl eine Verträglichkeit von besser als 1 Teil Harz zu 5 Teilen Öl besitzt, und ein Gel mit einem tanδ-Wert von 1,5 bildet.

Auch nach einer Lagerung von 8 Monaten an Luft löst sich das Harz unter den beschriebenen Bedingungen rückstandsfrei unter Bildung eines stabilen Gels mit einem tanδ-Wert von 1,5 auf. Das Harz kann in hervorragender Weise zur Herstellung von Offsetdruckfarben eingesetzt werden.

### Beispiel 3

Man verfährt analog wie in Beispiel 1, verwendet aber statt Kokosfett 57 g Stearinsäure (Jodzahl unter 1 g Jod/100 g Säure) und zusätzlich 6 g Glycerin. Nach einer Reaktionsdauer von 16 Stunden wird ein Harz vom Schmelzpunkt 125 °C erhalten, das in dem oben angegebenen Mineralöl eine Verträglichkeit von besser als 1 Teil Harz zu 5 Teilen Öl besitzt, und ein Gel mit einem tanδ-Wert von 1,6 bildet.

Auch nach einer Lagerung von 8 Monaten an Luft löst sich das Harz unter den beschriebenen Bedingungen rückstandsfrei unter Bildung eines stabilen Gels mit einem tanδ-Wert von 1,6 auf. Das Harz kann in hervorragender Weise zur Herstellung von Offsetdruckfarben eingesetzt werden.

### Beispiel 4

Man verfährt analog wie in Beispiel 1 und setzt 467 g Kolophonium, 60 g eines handelsüblichen Kohlenwasserstoffharzes, 28 g Maleinsäureanhydrid, 60 g hydriertes Kokosfett, 308 g Nonylphenol, 74 g Pentaerythrit, 6 g Magnesiumoxid und 78 g Paraformaldehyd um. Es werden 1320 g Festharz vom Erweichungspunkt 127 °C erhalten. Nach Auflösen in Mineralöl zu den in Vergleichsbeispiel 1 angegebenen Bedingungen wird ein Gel mit einem tanδ-Wert von 1,3 erhalten.

Auch nach einer Lagerung von 6 Monaten an Luft löst sich das Harz unter den beschriebenen Bedingungen rückstandsfrei unter Bildung eines stabilen Gels mit einem tanδ-Wert von 1,3 auf. Das Harz kann in hervorragender Weise zur Herstellung von Offsetdruckfarben eingesetzt werden.

### Beispiel 5

In einem heizbaren 2l-Autoklaven mit Rührwerk werden 467 g Kolophonium und 60 g eines handelsüblichen Kohlenwasserstoffharzes geschmolzen. Dazu gibt man 308 g Nonylphenol, 6g Magnesiumoxid und bei 110 °C 78 g Paraformaldehyd. Dann wird der Autoklav druckdicht verschlossen und auf eine Temperatur von 140 °C gebracht, so daß sich ein Druck von 3 bar einstellt. Nach 2 Stunden wird entspannt, der Autoklav mit einem absteigenden Kühler kombiniert und die Schmelze unter Destillation von Wasser auf 160 °C gebracht. Bei dieser Temperatur werden 28 g Maleinsäureanhydrid hinzugefügt, und anschließend die sehr zäh gewordene Schmelze unter Rühren innerhalb einer halben Stunde homogenisiert. Dann wird auf 180 °C erwärmt und zunächst 74 g Pentaerythrit und dann 60 g hydriertes Kokosfett eingerührt. Anschließend wird die Reaktionstemperatur auf 250 °C erhöht und ab 230 °C das entstehende Reaktionswasser über einen Wasserabscheider mit Xylol als azeotropes Schleppmittel abdestilliert. Bei Erreichen einer Säurezahl von 23 mg KOH/g Harz wird die Reaktion durch Abdestillieren des Schleppmittels, zuletzt über 30 Minuten im Vakuum bei 60 mbar, beendet und das Harz als Feststoff isoliert. Nach Auflösen in Mineralöl zu den im Vergleichsbeispiel angegebenen Bedingungen wird ein Gel mit einem tanδ-Wert von 1,2 erhalten.

Auch nach einer Lagerung von 6 Monaten an Luft löst sich das Harz unter den beschriebenen Bedingungen rückstandsfrei unter Bildung eines stabilen Gels mit einem tanδ-Wert von 1,2 auf. Das Harz läßt sich sehr gut zur Herstellung von Offsetdruckfarben verwenden.

## Patentansprüche

1. Öllösliche Phenolharz-modifizierte Naturharzsäureester, die nach wenigstens 3 Monaten Lagerung im Festzustand an der Luft noch in Mineralöl (Siedebereich 240 bis 270 °C, Anilinpunkt 72 °C) 40 Gew.-%ige trübungsfreie, selbstgelierende Lösungen bilden, herstellbar durch Reaktion von mindestens jeweils einer Verbindung aus den Substanzgruppen
A) Naturharze und Naturharzsäuren,
B) einkernige und mehrkernige Phenole, die gegenüber Oxoverbindungen einfach- oder mehrfach-funktionell sind,
C) Aldehyde und Aldehydacetale,
D) aliphatische, cycloaliphatische und aromatisch-aliphatische Alkohole mit mindestens zwei Hydroxylgruppen,
E) α,β-ethylenisch ungesättigte Carbonsäuren und deren Anhydride und
F) (C₁-C₈₀)-Carbonsäuren und Carbonsäureester mit einer Jodzahl kleiner als 50 g Jod/100 g Carbonsäure oder Carbonsäureester sowie gegebenenfalls weiteren Verbindungen aus der Substanzgruppe
G) ethylenisch ungesättigte Kohlenwasserstoffharze
in Gegenwart von
H) Magnesiumverbindungen
bei einer Temperatur im Bereich von 100 bis 300 °C unter kontinuierlicher azeotroper Destillation des Reaktionswassers mit einem Schleppmittel.

2. Phenolharz-modifizierte Naturharzsäureester nach Anspruch 1, dadurch gekennzeichnet, daß das auf Erbsengröße zerkleinerte Harz nach einer Lagerzeit von 6 Monaten an Luft nach dem Auflösen in Mineralöl (Siedebereich 240 bis 270 °C, Anilinpunkt 72 °C) und anschließendem Abkühlen auf 23 °C in 40 Gew.-%iger Konzentration ein Gel bildet, das keine Trübungen oder Entmischungen zeigt und einen Verlustfaktor (tanδ) im Bereich der Winkelgeschwindigkeit von 1 bis 10 s⁻¹ unterhalb von 2 aufweist.

3. Verfahren zur Herstellung von Phenolharz-modifizierten Naturharzsäureestern nach Anspruch 1 durch Umsetzung von
20 bis 80 Gew.-% Naturharze oder Naturharzsäuren aus der Substanzgruppe A),
1 bis 45 Gew.-% phenolische Komponenten aus der Substanzgruppe B) und 1 bis 20 Gew.-% Aldehyde oder Aldehydacetale aus der Substanzgruppe C),
oder anstelle der Aldehyd- oder Phenolkomponenten aus den Substanzgruppen B) und C) oder anteilig mit diesen bis zu 65 Gew.-% von aus Verbindungen der Substanzgruppen B) und C) separat hergestellte Kondensationsprodukte,
1 bis 20 Gew.-% Polyolkomponenten aus der Substanzgruppe D),
0,1 bis 10 Gew-%, α,β-ethylenisch ungesättigte Carbonsäuren oder deren Anhydride aus der Substanzgruppe E),
0,1 bis 30 Gew.% (C₁-C₈₀)-Carbonsäuren oder Carbonsäureester aus der Substanzgruppe F),
0 bis 30 Gew.-% Kohlenwasserstoffharzkomponenten aus der Substanzgruppe G) und
0,01 bis 5 Gew.-% berechnet als MgO, Magnesiumverbindungen aus der Substanzgruppe H) zusammen mit
0,01 bis 20 Gew.-% eines inerten Schleppmittels,
jeweils bezogen auf die Gesamtmenge der Komponenten A) bis H).

4. Verfahren zur Herstellung von Phenolharz-modifizierten Naturharzsäureestern nach Anspruch 3, dadurch gekennzeichnet, daß als Komponente F) aliphatische (C₃-C₃₀)-Carbonsäuren oder Carbonsäureester mit einer Jodzahl unterhalb von 15 g Jod/100 g Carbonsäure oder Carbonsäureester eingesetzt werden.

5. Verfahren zur Herstellung von Phenolharz-modifizierten Naturharzsäureestern nach Anspruch 4, dadurch gekennzeichnet, daß als Komponente F) Kokosöl, Kokosfett oder hydriertes Kokosfett eingesetzt werden.

6. Verfahren zur Herstellung von Phenolharz-modifizierten Naturharzsäureestern nach Anspruch 3, dadurch gekennzeichnet, daß zunächst mindestens jeweils eine Verbindung aus den Substanzgruppen A),B),C),H) und gegebenenfalls G) bei einer Temperatur von 100 bis 250 °C und einem Druck von 1 bis 10 bar miteinander umgesetzt werden, dem Reaktionsgemisch eine Verbindung aus der Substanzgruppe E) im Temperaturbereich von 100 bis 250 °C zugesetzt wird und anschließend eine Verbindung aus der Substanzgruppe D) hinzugefügt wird, zusätzlich eine Verbindung der Substanzgruppe F) an einer beliebigen Stelle der Reaktionssequenz eingesetzt wird und das Reaktionswasser kontinuierlich unter azeotroper Destillation mit einem Schleppmittel bei einer Reaktionstemperatur von 230 °C bis 260 °C entfernt wird.

7. Verwendung der Phenolharz-modifizierten Naturharzsäureester nach Anspruch 1 in Druckfarben für den Offsetdruck und den Buchdruck.
